# EUROPÄISCHE PATENTSCHRIFT

(11) **EP 4 275 479 B1**
(45) Veröffentlichungstag und Bekanntmachung des Hinweises auf die Patenterteilung: **20.05.2026**
(21) Anmeldenummer: 23161765.5
(22) Anmeldetag: 14.03.2023
(51) Int. Cl.: A01F 15/07, A01F 15/08

(54) **VERFAHREN ZUM BETREIBEN EINER RUNDBALLENPRESSE SOWIE RUNDBALLENPRESSE**
METHOD FOR OPERATING A ROUND BALER AND ROUND BALER
PROCÉDÉ DE FONCTIONNEMENT D'UNE PRESSE À BALLES RONDES AINSI QUE PRESSE À BALLES RONDES

(30) Priorität: 11.05.2022 DE 102022111819
(43) Veröffentlichungstag der Anmeldung: 15.11.2023
(73) Patentinhaber: Usines CLAAS France S.A.S, 57140 St. Rémy / Woippy (FR)
(72) Erfinder: Fuchs, Volker, 54439 Saarburg (DE); Wucher, Renaud, 57070 Metz (FR); Dubois, Romain, 57000 Metz (FR)
(74) Vertreter: CLAAS Gruppe

(56) Entgegenhaltungen:
- EP-B1- 1 008 292
- EP-B1- 1 595 440
- DE-A1- 19 718 229
- US-A- 4 611 535
- US-B2- 7 703 391

## Beschreibung

Die vorliegende Erfindung betrifft ein Verfahren zum Betreiben einer Rundballenpresse gemäß dem Oberbegriff des Anspruches 1. Weiterhin betrifft die vorliegende Erfindung eine Rundballenpresse gemäß dem Oberbegriff des Anspruches 10.

Ein Verfahren zum Betreiben einer Rundballenpresse sowie eine Rundballenpresse der eingangs genannten Art sind aus der DE 197 18 229 A1 bekannt. Bei der aus der DE 197 18 229 A1 bekannten variablen Rundballenpresse wird der Verdichtungsdruck zur Bildung bzw. Formung eines Rundballens durch ein als Pressriemen ausgeführtes Pressmittel aufgebracht, der mittels zweier Spannarme verstellt wird. Die Spannarme sind wiederum mit als Hydraulikzylindern ausgeführten Aktoren zu deren Verstellung verbunden, die mit einem Hydraulikfluid entsprechend dem zu erzielenden Verdichtungsdruck beaufschlagt werden. Hierzu ist ein Druckbegrenzungsventil zur Regelung des Verdichtungsdrucks in das die Hydraulikzylinder versorgende Hydrauliksystem eingebaut. Durch das Druckbegrenzungsventil wird ein Grenzdruckwert eingestellt, der dem zu erzielenden Verdichtungsdruck entspricht. Beim Überschreiten des Grenzdruckwertes wird das Druckbegrenzungsventil in seine Offenstellung überführt.

Weiterhin ist aus der EP 1 008 292 B1 eine Rundballenpresse und ein Verfahren zum Herstellen von hochverdichteten Rundballen aus landwirtschaftlichen Erntegütern bekannt, wobei die Rundballenpresse lediglich einen Spannarm aufweist.

Nachteilig bei der vorstehend beschriebenen Rundballenpresse ist, dass das Hydrauliksystem, welches zur Einstellung des Verdichtungsdrucks bzw. der Riemenspannung die Beaufschlagung der Aktoren der beiden Spannarme verändert, eine passive Vorrichtung ist, die auf Umgebungsbedingungen sensibel reagiert, insbesondere auf eine ungleichmäßige Zufuhr mit Erntegut. Liegt eine ungleichmäßige Erntegutzufuhr vor, verliert der Pressriemen während des Betriebs sukzessive an Riemenspannung. Dies liegt darin begründet, dass bei einer ungleichmäßigen Gutzufuhr eine Schwingung im Pressriemen induziert wird, die zu einer sich aufschwingenden Riemenspannung und einem sich aufschwingenden hydraulischen Druck führt. Immer dann, wenn der hydraulische Druck im System dem eingestellten Grenzdruckwert entspricht, der zum Schalten des Druckbegrenzungsventils führt, wird das Druckbegrenzungsventil offengeschaltet und der hydraulische Druck im Hydrauliksystem baut sich ab. Dieses Schaltverhalten führt allerdings dazu, dass sich die Riemenspannung über den Betrieb hinweg verringert und die gewünschte Riemenspannung sukzessive von der gewünschten respektive erforderlichen Zielriemenspannung abweicht. Dieser Sachverhalt ist unbefriedigend und sorgt dafür, dass die geformten Rundballen unter Umständen nicht die gewünschten Eigenschaften hinsichtlich ihrer Form und ihrer Verdichtung aufweisen.

Der Erfindung liegt somit die Aufgabe zugrunde, ein Verfahren zum Betreiben einer Rundballenpresse sowie eine Rundballenpresse in der Weise weiterzubilden, dass sich ein effizienterer Betrieb der Rundballenpresse erreichen lässt.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 10. Die hierauf jeweils folgenden abhängigen Ansprüche geben jeweils vorteilhafte Weiterbildungen der Erfindung wieder.

Gemäß dem Anspruch 1 wird ein Verfahren zum Betreiben einer Rundballenpresse vorgeschlagen, mit einer in einem Gehäuse angeordneten, einen variablen Durchmesser aufweisenden Presskammer, die von einem endlos umlaufenden Pressmittel begrenzt wird, wobei das Pressmittel von mehreren Rollen angetrieben und/oder geführt wird, wobei zumindest einige der Rollen durch einen jeweils gehäuseseitig schwenkbar gelagerten ersten Spannarm und zweiten Spannarm in ihrer Position verstellt werden, wobei der erste Spannarm und der zweite Spannarm durch hydraulisch betätigte Aktoren eines Hydrauliksystems in ihrer Position verstellt werden, so dass zumindest ein Verdichtungsdruck erzeugt wird, mit welchem das Pressmittel zur Formung eines Rundballens wirkt, wobei zur Regelung des Verdichtungsdruckes zumindest einem Druckbegrenzungsventil ein anpassbarer Grenzdruckwert zum Überführen des zumindest einen Druckbegrenzungsventils aus einer Schließstellung in eine Offenstellung durch eine Steuereinheit vorgegeben wird. Erfindungsgemäß ist vorgesehen, dass der vorgegebene Grenzdruckwert oberhalb eines Druckwertes liegt, welcher einer zur Erzielung des Verdichtungsdruckes erforderlichen Sollpressmittelzugspannung entspricht, und dass das zumindest eine Druckbegrenzungsventil durch Ansteuerung durch die Steuereinheit periodisch in seine Offenstellung überführt wird. Das Einstellen des Grenzdruckwertes auf einen Wert, der oberhalb des Druckwertes liegt, welcher der zur Erzielung des Verdichtungsdruckes erforderlichen Sollpressmittelzugspannung entspricht, verhindert ein versehentliches Öffnen des zumindest einen Druckbegrenzungsventils aufgrund von Druckschwankungen, welche durch die Schwingungen des Pressmittels während des Formungsvorgangs in dem Hydrauliksystem hervorgerufen werden. Das während des Formungsvorganges periodische Überführen des zumindest einen Druckbegrenzungsventils in seine Offenstellung, insbesondere unabhängig von Druckschwankungen, bewirkt, dass der Verlauf der tatsächlichen Pressmittelzugspannung im Wesentlichen im Bereich des Verlaufs einer Sollpressmittelzugspannung liegt. Durch das erfindungsgemäße Verfahren wird eine höhere Sensitivität erreicht, mit der das durch die Steuereinheit angesteuerte Hydrauliksystem der Rundballenpresse auf eine ungleichmäßige Zuführung mit Erntegut reagiert. Ein weiterer Effekt besteht darin, dass eine Bedienperson der Rundballenpresse von der Aufgabe der Überwachung der Pressmittelzugspannung entlastet wird. Die Kombination aus der Einstellung des Grenzdruckwertes und dem periodischen Öffnen des zumindest einen Druckbegrenzungsventils bewirken, dass das an und für sich passive Hydrauliksystem aktiv verwendet wird. Periode und Amplitude der Offenstellung werden in Abhängigkeit von der Abweichung einer jeweiligen Ist-Pressmittelzugspannung von der Sollpressmittelzugspannung als Zielwert angesteuert.

Bevorzugt kann mittels einer Eingabe-Ausgabeeinheit der Steuereinheit zumindest eine Eingangsgröße durch eine Bedienperson vorgegeben werden, um in Abhängigkeit von den Eingangsgrößen den Grenzdruckwert zu adaptieren.

Hierzu können als Eingangsgrößen eine Erntegutart, eine Ballenform, Ballendurchmesser und/oder absolute oder relative Werte für Verdichtungsdrücke vorgegeben werden. Dabei kann die Eingabe für Ballendurchmesser einen Ballenanfangsdurchmesser und einen Ballenenddurchmesser als Minimal- und Maximalwert umfassen. In Abhängigkeit von der Ballenform kann die Eingabe absolute oder relative Werte für die Verdichtungsdrücke umfassen, die den Werten für den Ballenanfangsdurchmesser und den Ballenenddurchmesser zugeordnet werden. Mögliche Ballenformen sind ein Weichkernballen oder ein Hartballen. Im Fall von Hartballen werden bevorzugt relative Werte für die Verdichtungsdrücke eingegeben, während im Fall des Weichkernballens bevorzugt absolute Werte für die Verdichtungsdrücke eingegeben werden.

Des Weiteren kann mittels der Eingangsgrößen rezeptbasierend die Zielvorgabe für den Verdichtungsdruck in Abhängigkeit vom aktuellen Durchmesser bestimmt werden. Rezeptbasierend heißt in diesem Zusammenhang, dass die Steuereinheit die Eingangsgrößen für die ballenformspezifische Herstellung des Ballens, d.h. einen Weichkernballen oder einen Hartballen, anhand von hinterlegten Rezepten respektive Regelwerken automatisch in einen vom aktuellen Durchmesser abhängigen Verdichtungsleistungsverlauf umrechnen kann. Diese Rezepte ändern dann die Zielvorgabe für die Verdichtungslast in Abhängigkeit vom aktuellen Durchmesser des herzustellenden Ballens.

Insbesondere können zumindest Anstellwerte für die periodische Ansteuerung des zumindest einen Druckbegrenzungsventils unter Anwendung zumindest eines stochastischen Verfahrens bestimmt werden. Mittels der Steuereinheit können die Anstellwerte durch einen Schätzer bestimmt werden. Vorzugsweise soll für die Erfindung ein Schätzer aus der Gruppe der Bayesschen Filter zum Einsatz kommen, wie beispielsweise ein Partikel-Filter oder ein Kalman-Filter, mit den darin entsprechend implementierten Schätzalgorithmen. Anstellwerte für die periodische Ansteuerung des zumindest einen Druckbegrenzungsventils können Amplitude, Pulsdauer sowie Periode sein.

Dabei können durch die Steuereinheit aus einer zu erwartenden Dichte des Rundballens und einem detektierten Durchsatz während des Formungsvorgangs die sich jeweils nach zumindest einer Ballendrehung einstellenden Anstellwerte geschätzt werden. Zur Bestimmung der zu erwartenden Dichte des Rundballens zu unterschiedlichen Zeitpunkten während des Formungsvorgangs können die eingegebenen Eingangsgrößen herangezogen werden.

Bevorzugt können durch eine Sensoranordnung an der Ballenpresse Sensorsignale bereitgestellt werden, die für eine Verteilung von durch eine Aufnahmevorrichtung der Ballenpresse aufgenommenen Erntegutes repräsentativ sind, wobei die Sensorsignale von der Steuereinheit zur Generierung von Steuerdaten zur Ansteuerung der Aktoren ausgewertet werden. Hierzu kann die Sensoranordnung eine Ballenformsensoranordnung aufweisen, die dazu eingerichtet ist, die Ballenform während des Ballenformungsvorgangs zu überwachen. Durch eine derartige Ballenformsensoranordnung kann eine von einer im Wesentlichen kreiszylindrischen Form abweichende Ballenform detektiert werde, die auf eine ungleichmäßige Erntegutzufuhr zurückzuführen ist.

Dabei kann bei Detektion einer inhomogenen Zuführung von Erntegut in die Presskammer die Pressmittelzugspannung erhöht werden. Durch eine Erhöhung der Pressmittelzugspannung lässt sich ein Flattern des Pressmittels vermeiden, wenn der zu formende Rundballen nicht vollständig rund ist. Es kann Schwingungen im Pressmittel als auch im Hydrauliksystem begegnet werden, wodurch eine Abweichung von der Sollpressmittelzugspannung vermieden oder zumindest minimiert wird.

Insbesondere können Arbeitsdrücke der Aktoren eines jeden Spannarmes durch jeweils ein Druckbegrenzungsventil überwacht werden. Gegenüber der aus dem Stand der Technik bekannten Lösung, welche zur Überwachung der Kraftkopplung der beiden Spannarme im Hydrauliksystem ein gemeinsames Druckbegrenzungsventil zur Steuerung des Verdichtungsdruckes vorsieht, werden gemäß dieser Ausführungsform zwei Druckbegrenzungsventile verwendet, welche es ermöglichen, mittels eines Steueralgorithmus das Kräftegleichgewicht zwischen den beiden Spannarmen zur Spannung des Pressmittels zu steuern.

Bevorzugt kann der vorgegebene Grenzdruckwert in Abhängigkeit von der Zunahme des Ballendurchmessers erhöht werden. Insbesondere kann ein Verlauf des Grenzdruckwertes korrespondierend zum Verlauf der Sollpressmittelzugspannung angepasst werden.

Weiterhin wird die eingangs gestellte Aufgabe durch eine Rundballenpresse gemäß dem nebengeordneten Anspruch 10 gelöst.

Gemäß dem nebengeordneten Anspruch 10 wird eine Rundballenpresse mit einer in einem Gehäuse angeordneten, einen variablen Durchmesser aufweisenden Presskammer vorgeschlagen, wobei die Presskammer von einem endlos umlaufenden Pressmittel begrenzt ist, mit mehreren Rollen, welche das Pressmittel antreiben und/oder führen, wobei zur Verstellung zumindest einiger der Rollen in ihrer Position ein gehäuseseitig schwenkbar gelagerter erster Spannarm und zweiter Spannarm vorgesehen sind, wobei zur Erzeugung eines Verdichtungsdruckes, mit welchem das Pressmittel zur Formung eines Rundballens wirkt, hydraulisch betätigte Aktoren zur Verstellung der Position des ersten Spannarms und des zweiten Spannarms vorgesehen sind, mit welchem das Pressmittel zur Formung eines Rundballens wirkt, wobei zur Regelung des Verdichtungsdruckes eine Steuereinheit zumindest einem Druckbegrenzungsventil einen anpassbaren Grenzdruckwert zum Überführen des zumindest einen Druckbegrenzungsventils aus einer Schließstellung in eine Offenstellung vorgibt, wobei der vorgegebene Grenzdruckwert oberhalb eines Druckwertes liegt, welcher einer zur Erzielung des Verdichtungsdruckes erforderlichen Sollpressmittelzugspannung entspricht, und dass die Steuereinheit das zumindest eine Druckbegrenzungsventil ansteuert, um während des Formungsvorgangs das zumindest eine Druckbegrenzungsventil periodisch in seine Offenstellung zu überführen. Auf alle Ausführungen zu dem vorschlagsgemäßen Verfahren zum Betreiben der Rundballenpresse darf verwiesen werden.

Insbesondere kann die Steuereinheit eine Eingabe-Ausgabeeinheit umfassen, welche zur Eingabe von Eingangsgrößen durch eine Bedienperson eingerichtet ist.

Dabei kann die Eingabe-Ausgabeeinheit zur Eingabe von Erntegutart, Ballenform, Ballendurchmesser und/oder absoluten oder relativen Werten für Verdichtungsdrücke als Eingangsgrößen eingerichtet sein. Bevorzugt können die Eingangsgrößen Ballendurchmesser sowie Verdichtungsdrücke als Bereichsangaben, insbesondere mittels grafisch visualisierter Balkendiagramme, eingestellt werden.

Weiterhin kann die Steuereinheit dazu eingerichtet sein, in Abhängigkeit von zumindest einer der Eingangsgrößen den Grenzdruckwert zu adaptieren.

Gemäß einer bevorzugten Weiterbildung kann die Steuereinheit dazu eingerichtet sein, Anstellwerte für die periodische Ansteuerung des zumindest einen Druckbegrenzungsventils unter Anwendung zumindest eines stochastischen Verfahrens zu bestimmen.

Insbesondere kann die Rundballenpresse Sensoreinrichtungen zur Bestimmung des Feuchtigkeitsgehalts von aufgenommenem Erntegut sowie der aufgenommenen und/oder der Presskammer zugeführten Zuführmenge umfassen. Der Feuchtigkeitsgehalt sowie die Zuführmenge stellen wesentliche Betriebsparameter und/oder Umgebungsparameter dar, die den Ballenformungsprozess beeinflussen. Die Zuführmenge kann beispielsweise durch eine Schichthöhendetektion in einer Aufnahmeeinrichtung der Ballenpresse bestimmt werden.

Bevorzugt kann die Rundballenpresse eine Sensoranordnung aufweisen, die dazu eingerichtet ist, Sensorsignale bereitzustellen, die für eine Verteilung von durch eine Aufnahmevorrichtung der Rundballenpresse aufgenommenen Erntegutes repräsentativ sind.

Die Steuereinheit ist zum Empfang und zur Auswertung der von der Sensoranordnung erzeugten Sensorsignale eingerichtet und generiert in Abhängigkeit von den ausgewerteten Sensorsignalen Steuerdaten zur Ansteuerung der Aktoren. Hierzu kann die Sensoranordnung eine Ballenformsensoranordnung aufweisen, die dazu eingerichtet ist, die Ballenform während des Ballenformungsvorgangs zu überwachen. Durch eine derartige Ballenformsensoranordnung kann eine von einer im Wesentlichen kreiszylindrischen Form abweichende Ballenform detektiert werde, die auf eine ungleichmäßige Erntegutzufuhr zurückzuführen ist.

Insbesondere ist ein Computerprogramm vorgesehen, umfassend Programmanweisungen, die einen Prozessor zur Ausführung und/oder Steuerung der Schritte des Verfahrens nach einem der Ansprüche 1 bis 9 veranlassen, wenn das Computerprogramm auf dem Prozessor läuft. Der dem Computerprogramm zugrundeliegende Algorithmus zum Spannen des Pressmittels prognostiziert die Zuführmenge an Erntegut und stellt sicher, dass nur die benötigte Ölmenge aus dem Hydrauliksystem durch das zumindest eine Druckbegrenzungsventil abgeführt wird, um das Pressmittel stets unter Kontrolle zu halten, insbesondere ein Flattern des Pressmittels aufgrund einer zu geringen Pressmittelzugspannung zu vermeiden.

Die vorliegende Erfindung wird nachstehend anhand eines in den Zeichnungen dargestellten Ausführungsbeispieles näher erläutert.

Es zeigen:
- Fig. 1: eine schematische Darstellung einer Rundballenpresse mit variabler Presskammer in Seitenansicht;
- Fig. 2: eine schematische Darstellung einer Steuereinheit der Rundballenpresse;
- Fig. 3: ein Pressmittelzugspannungs-Zeitdiagramm nach einer Steuerung gemäß dem Stand der Technik; und
- Fig. 4: ein Pressmittelzugspannungs-Zeitdiagramm gemäß dem erfindungsgemäßen Verfahren.

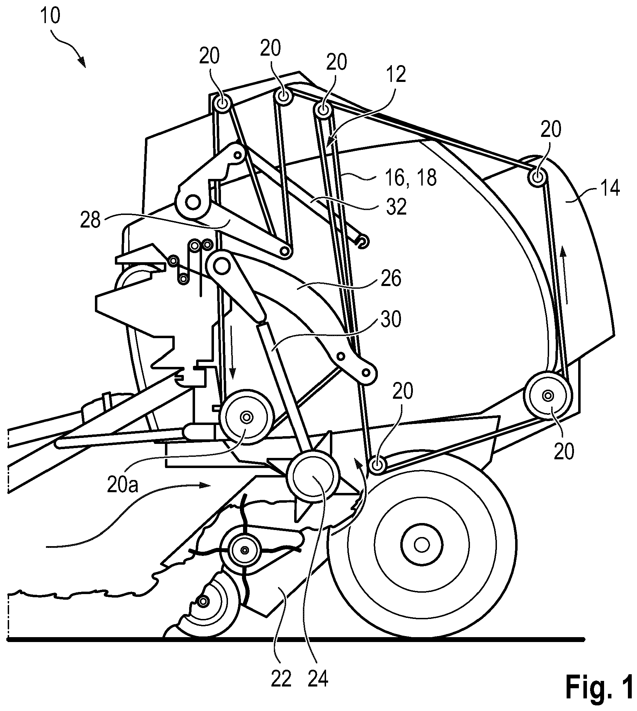

Fig. 1 zeigt eine schematische Darstellung einer Rundballenpresse mit variabler Presskammer in Seitenansicht. Die Rundballenpresse 10 weist eine variable Presskammer 12 in einem Gehäuse 14 auf. Zum Pressen eines Rundballens 16 weist die Ballenpresse 10 ein endlos umlaufendes Pressmittel 16 auf. Das Pressmittel 16 kann aus einem oder mehreren Pressriemen 18 oder Ketten gebildet werden. Das Pressmittel 16 wird durch eine Mehrzahl an Rollen 20 geführt, wobei die Rollen 20 ortsfest oder variabel angeordnet sein können. Mit 20a ist eine als ortsfeste Antriebsrolle ausgeführte Rolle bezeichnet, welche eine Antriebskraft auf das Pressmittel 16 überträgt. Durch eine Aufnahmeeinrichtung 22 wird Erntegut in der Regel in Form eines Schwads aufgenommen, an einem Rotor 24 entlang geleitet, wobei das Erntegut zerkleinert wird, und in die Presskammer 12 eingeleitet, wo das Erntegut verdichtet und zu einem - nicht dargestellten Rundballen - gepresst wird. Der Rotor 24 kann dabei in die Presskammer 12 hineinragen und mit einem, beispielsweise im Uhrzeigersinn drehenden Rundballen, in Kontakt sein und mit diesem mitdrehen. Ein fertig gepresster Rundballen wird üblicherweise vor einem Auswerfen aus der Presskammer 12 mit einem Wickelmaterial, beispielsweise einem Garn oder einem Netz, umwickelt, um den Rundballen zu stabilisieren.

Die Presskammer 12, in der das Erntegut verdichtet wird, wird durch eine wirksame Länge des Pressmittels 16 gebildet. Eine wirksame Länge des Pressmittels 16 ist dabei die Länge des Pressmittels 16, welche die Presskammer 12 umschließt und insbesondere in Kontakt mit einem Rundballen wirkt und eine Presskraft auf diesen überträgt.

Durch eine Verlagerung von Rollen 20 ist die Größe der Presskammer 12 variierbar. Die verlagerbaren Rollen 20 sind dabei jeweils endseitig an einem ersten Spannarm 26 und einem zweiten Spannarm 28 angeordnet. Der erste Spannarm 26 ist dabei gehäuseseitig schwenkbar gelagert und weist an seinem freien Ende zwei Rollen 20 auf, welche eine Schlaufe des Pressmittels 16 führen. Durch eine Veränderung der Position des ersten Spannarmes 26 ist die Größe der Presskammer 12 veränderbar. Durch das weiter in die Presskammer 12 geförderte Erntegut wächst der Rundballen stetig an, wobei der erste Spannarm 28 mit zunehmender Größe der Presskammer 12 und insbesondere zunehmendem Durchmesser des Rundballens 16 ausgelenkt wird. Mit zunehmender Auslenkung des ersten Spannarmes 26 nehmen die Größe der Presskammer 12 und die wirksame Länge des Pressmittels 16 zu. Um einen zu starken Anstieg des Verdichtungsdruckes zu vermeiden, wird über eine Verlagerung des zweiten Spannarmes 28, welcher eine Schlaufe des Pressmittels 16 aufspannt, zusätzlich Pressmittel 16 bereitgestellt.

Hierfür wird der zweite Spannarm 28 derart verschwenkt, dass die Schlaufe des Pressmittels 16 verringert wird, und die dadurch verfügbare Länge des Pressmittels 16 als wirksame Länge nutzbar ist. Hierbei sind dem ersten Spannarm 26 zwei hydraulisch betätigte Aktoren 30 und dem zweiten Spannarm 28 ein weiterer hydraulisch betätigter Aktor 32 zugeordnet.

Der Rundballen in der Presskammer 12 wächst mit zunehmender Förderung an Erntegut an, wodurch der erste Spannarm 26 ausgelenkt wird und die wirksame Länge des Pressmittels 16 zunimmt. Die Auslenkung des ersten Spannarmes 26 wird durch zumindest ein Druckbegrenzungsventil 34 geregelt, wodurch neben einer Ballenform, einem Weichkernballen oder einem Hartballen, auch der Verdichtungsdruck beeinflusst werden kann. Durch das Pressmittel 16 wird auch auf das freie Ende des zweiten Spannarmes 28 eine Kraft ausgeübt, welche aufgrund der dargestellten Anordnung der Rollen 20 ein Verschwenken des zweiten Spannarmes 28 weg von dem ersten Spannarm 26 bewirken kann. Da bei einem Verschwenken des zweiten Spannarmes 28 die dort gebildete Schlaufe des Pressmittels 16 verkleinert wird, nimmt das Pressmittel 16, welches für die wirksame Länge verfügbar ist, zu. Durch das Verschwenken des zweiten Spannarmes 28 kann die Presskraft ebenfalls beeinflusst werden. Die Auslenkung des zweiten Spannarmes 28 wird hier und vorzugsweise durch ein weiteres Druckbegrenzungsventil 36 geregelt.

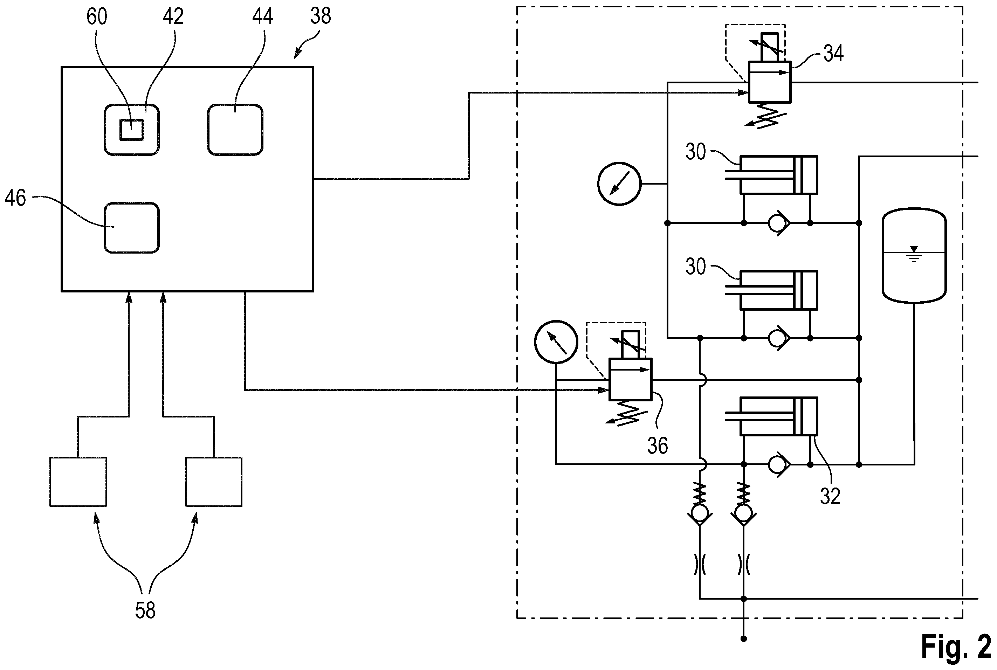

In Fig. 2 ist eine exemplarische Darstellung eines Teils eines Hydrauliksystems 40 der Rundballenpresse 10 gezeigt. Der Verdichtungsdruck zur Bildung des Rundballens 16 wird durch das Pressmittel 16 aufgebracht, der mittels des ersten und des zweiten Spannarms 26, 28 verstellt wird. Die Spannarme 26, 28 sind zu deren Verstellung mit den als Hydraulikzylindern ausgeführten Aktoren 30, 32 verbunden, die mit einem Hydraulikfluid entsprechend dem zu erzielenden Verdichtungsdruck beaufschlagt werden. Durch die Druckbegrenzungsventile 34, 36 können entsprechend dem zu erzielenden Verdichtungsdruck erforderliche Druckwerte eingestellt werden. Die Arbeitsdrücke der Aktoren 30, 32 eines jeden Spannarmes 26, 28 werden durch das jeweilige Druckbegrenzungsventil 34, 36 überwacht. Die beiden Druckbegrenzungsventile 34, 36 ermöglichen es, durch einen Kontrollalgorithmus das Kräftegleichgewicht zwischen den Spannarmen 26, 28 zu steuern oder zu regeln. Hierzu weist die Ballenpresse 10 eine Steuereinheit 38 auf, welche dazu eingerichtet ist, für den zu erzielenden Verdichtungsdruck erforderliche Grenzdruckwerte an den Druckbegrenzungsventilen 34, 36 einzustellen und den Kontrollalgorithmus auszuführen. Grundsätzlich kann das Hydrauliksystem 40 auch nur ein Druckbegrenzungsventil 34 umfassen.

Fig. 2 zeigt zudem exemplarisch und schematisch die Steuereinheit 38, welche eine Speichereinheit 42, eine Recheneinheit 44 sowie eine Eingabe-Ausgabeeinheit 46 umfasst. Mittels der Eingabe-Ausgabeeinheit 46 hat eine Bedienperson der Ballenpresse 10 die Möglichkeit, zumindest eine Eingangsgröße einzugeben, welche der Herstellung des Ballens zugrunde gelegt werden soll. Als Eingangsgrößen können eine Erntegutart, eine Ballenform, Ballendurchmesser und/oder Werte für Verdichtungsdrücke vorgegeben werden. Die Eingabe von Werten für die Verdichtungsdrücke kann als Absolutwerte oder Relativwerte erfolgen.

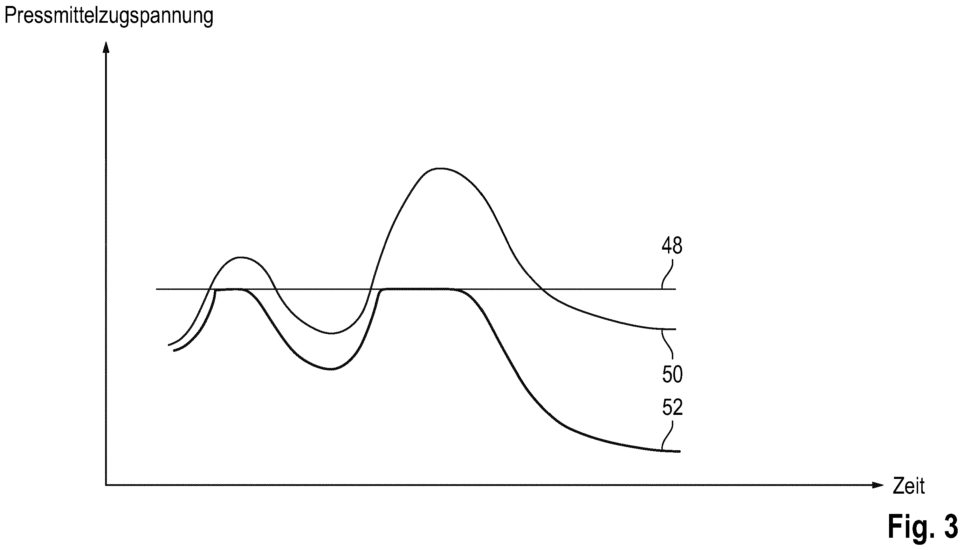

In Fig. 3 ist exemplarisch ein Pressmittelzugspannungs-Zeitdiagramm nach einer Steuerung gemäß dem Stand der Technik dargestellt. In Fig. 3 sind lediglich Ausschnitte eines Verlaufs einer Sollpressmittelzugspannung 48, eines Verlaufs einer Pressmittelzugspannung 50 ohne einen Eingriff durch eine Steuerung oder Regelung sowie eines gemäß dem Stand der Technik gesteuerten Verlaufes einer Pressmittelzugspannung 52 dargestellt. Die Sollpressmittelzugspannung 48 gemäß dem dargestellten Verlauf korrespondiert dabei mit dem angestrebten Zielverdichtungsdruck während des Formungsvorganges des Rundballens.

Der Verlauf der in Fig. 3 exemplarisch dargestellten ungeregelten Pressmittelzugspannung 50 stellt sich ein, wenn auf die in das Hydrauliksystem 40 eingeleiteten Schwingungen des Pressmittels 16 aufgrund von ungleichmäßiger Erntegutzufuhr nicht durch eine Steuerung reagiert wird, das heißt die ungeregelte Pressmittelzugspannung 50 des Pressmittels 16 nicht temporär abgesenkt wird. Bei einer ungleichmäßigen Gutzufuhr wird eine Schwingung im Pressmittel 16 induziert, die zu einem sich aufschwingenden Verlauf der Pressmittelzugspannung 50 und damit korrespondierend zu einem sich aufschwingenden hydraulischen Druck im Hydrauliksystem 40 führt. Entsprechend weist der Verlauf der ungeregelten Pressmittelzugspannung 50 Amplituden auf, die unterhalb und oberhalb des Verlaufes für die Sollpressmittelzugspannung 48 liegen.

Der Verlauf der gemäß dem Stand der Technik gesteuerten Pressmittelzugspannung 52 orientiert sich an einem eingestellten Grenzdruckwert p_{Grenz}, der zum Schalten des zumindest einen Druckbegrenzungsventils 34, 36, hier beider Druckbegrenzungsventile 34, 36, führt. Der eingestellte Grenzdruckwert p_{Grenz} orientiert sich am Verlauf der Sollpressmittelzugspannung 48, wobei der Maximalwert für den Arbeitsdruck der Aktoren 30, 32 zum Erreichen der Sollpressmittelzugspannung 48 dem Grenzdruckwert p_{Grenz} entspricht. Überschreitet die tatsächliche Ist-Pressmittelzugspannung gemäß dem in Fig. 3 dargestellten Verlauf der Pressmittelzugspannung 50 die Sollpressmittelzugspannung 48, wird durch die Steuerung des Standes der Technik das Überschreiten des Grenzdruckwertes p_{Grenz} detektiert, was zum temporären Öffnen des oder der Druckbegrenzungsventile 34, 36 führt. Somit wird immer dann, wenn der hydraulische Druck im Hydrauliksystem 40 dem eingestellten Grenzdruckwert p_{Grenz} entspricht, der zum Schalten eines Druckbegrenzungsventils 34, 36 führt, das Druckbegrenzungsventil 34, 36 offengeschaltet und der hydraulische Druck im Hydrauliksystem 40 baut sich ab. Dies führt dazu, dass eine Glättung der Zugspannungsspitzen im Verlauf der ungeregelten Pressmittelzugspannung 50 erreicht wird, der Verlauf der gesteuerten Pressmittelzugspannung 52 jedoch bezogen auf den Verlauf der Sollpressmittelzugspannung 48 im Verlauf des Formungsvorgangs mit zunehmendem Ballendurchmesser abnimmt.

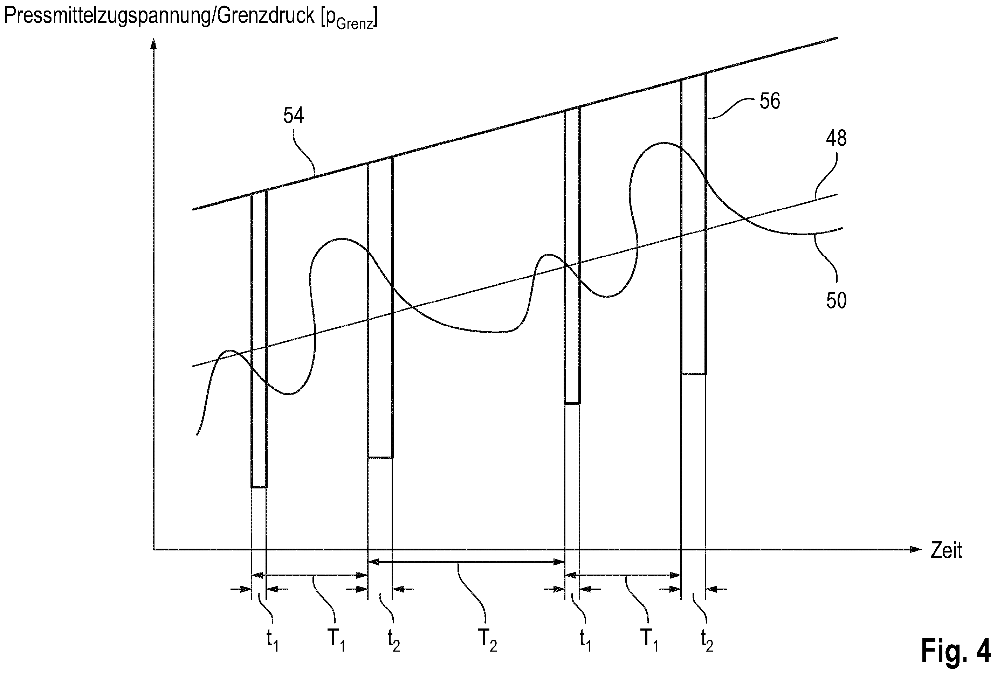

In Fig. 4 ist exemplarisch ein Pressmittelzugspannungs-Zeitdiagramm gemäß dem erfindungsgemäßen Verfahren dargestellt. Darin dargestellt sind wieder der Verlauf der Sollpressmittelzugspannung 48 und der Verlauf der ungeregelten Pressmittelzugspannung 50, welcher sich ohne eine Steuerung oder Regelung einstellt.

Weiterhin zeigt die Darstellung einen Verlauf 54 für einen Grenzdruckwert p_{Grenz}, welcher in Abhängigkeit von den Eingangsgrößen eingestellt wird. Dabei ist der Grenzdruckwertverlauf 54 insbesondere vom aufzubringenden Verdichtungsdruck sowie dem Ballendurchmesser abhängig. Der vorgegebene Grenzdruckwert p_{Grenz} liegt oberhalb eines Druckwertes, welcher einer zur Erzielung des Verdichtungsdruckes erforderlichen Pressmittelzugspannung gemäß dem Verlauf der Sollpressmittelzugspannung 48 entspricht. Hierdurch wird einem versehentlichen Öffnen der Druckbegrenzungsventile 34, 36 begegnet. Zugleich wird das zumindest eine Druckbegrenzungsventil 34, 36 während des Formungsvorganges periodisch in seine Offenstellung überführt. Ein Signalverlauf 56 für eine Pulsdauermodulation zur Ansteuerung des zumindest einen Druckbegrenzungsventils 34, 36, um diese während des Formungsvorganges periodisch in ihre Offenstellung zu überführen, ist ebenfalls in Fig. 4 beispielhaft dargestellt. Durch die pulsdauermodulierte Ansteuerung der Druckbegrenzungsventile 34, 36 durch die Steuereinheit 38 wird bewirkt, dass der Verlauf der sich tatsächlich einstellenden Pressmittelzugspannung im Wesentlichen im Bereich des Verlaufes der Sollpressmittelzugspannung 48 liegt. Der höhere Grenzdruckwert p_{Grenz} erlaubt es, Druckspitzen im Hydrauliksystem 40 zuzulassen, die gemäß dem Stand der Technik unmittelbar durch das Öffnen des zumindest einen Druckbegrenzungsventiles 34, 36 geglättet werden. Die gezielte Ansteuerung der Druckbegrenzungsventile 34, 36 während des Formungsvorganges hat den Effekt, dass der Verlauf der tatsächlichen Pressmittelzugspannung im Wesentlichen im Bereich des Verlaufs der Sollpressmittelzugspannung 48 liegt. Hierfür werden Amplitude, Pulsdauer t₁, t₂ sowie Periode T₁, T₂ als Anstellwerte in Abhängigkeit von der Sollpressmittelzugspannung 48 respektive der Abweichung des tatsächlichen Verlaufes der Pressmittelzugspannung von dem Verlauf der Sollpressmittelzugspannung 48 bestimmt und eingestellt. Der Grenzdruckwertverlauf 54 kann sich dabei am Verlauf der Sollpressmittelzugspannung 48 orientieren.

Die Anstellwerte Amplitude, Pulsdauer t₁, t₂ sowie Periode T₁, T₂ für die periodische Ansteuerung des zumindest einen Druckbegrenzungsventils 34, 36 werden unter Anwendung zumindest eines stochastischen Verfahrens bestimmt. Hierzu werden durch die Steuereinheit 38 aus einer zu erwartenden Dichte des Rundballens und einem detektierten Durchsatz während des Formungsvorgangs die sich nach zumindest einer Ballendrehung einstellenden Anstellwerte geschätzt. Dazu kann die Rundballenpresse 10 Sensoreinrichtungen zur Bestimmung des Feuchtigkeitsgehalts von aufgenommenem Erntegut sowie der aufgenommenen und/oder der Presskammer zugeführten Zuführmenge umfassen. Der Feuchtigkeitsgehalt sowie die Zuführmenge stellen wesentliche Betriebsparameter und/oder Umgebungsparameter dar, die den Ballenformungsprozess beeinflussen. Die Zuführmenge an aufgenommenem Erntegut kann beispielsweise durch eine Schichthöhendetektion in einer Aufnahmeeinrichtung der Ballenpresse 10 bestimmt werden.

Des Weiteren werden durch eine, insbesondere mehrteilige, Sensoranordnung 58 an der Ballenpresse 10 Sensorsignale bereitgestellt, die für eine Verteilung in Querrichtung von durch die Aufnahmevorrichtung 22 der Ballenpresse 10 aufgenommenen Erntegutes repräsentativ sind. Die Sensorsignale der Sensoranordnung 58 werden von der Steuereinheit 38 zur Generierung von Steuerdaten zur Ansteuerung der Aktoren 30, 32 ausgewertet. Bei einer Detektion einer inhomogenen Zuführung von Erntegut in die Presskammer 12 wird als Reaktion hierauf die Ist-Pressmittelzugspannung erhöht.

Mittels der Steuereinheit 38 werden die Anstellwerte für die pulsdauermodulierte Ansteuerung der Druckbegrenzungsventile 34, 36 hier und vorzugsweise durch einen Schätzer 60 bestimmt. Vorzugsweise soll für die Erfindung ein Schätzer 60 aus der Gruppe der Bayesschen Filter zum Einsatz kommen, wie beispielsweise ein Partikel-Filter oder ein Kalman-Filter, mit den darin entsprechend implementierten Schätzalgorithmen.

### Bezugszeichenliste

- 10: Rundballenpresse
- 12: Presskammer
- 14: Gehäuse
- 16: Pressmittel
- 18: Pressriemen
- 20: Rolle
- 20a: Rolle
- 22: Aufnahmevorrichtung
- 24: Rotor
- 26: Erster Spannarm
- 28: Zweiter Spannarm
- 30: Aktor
- 32: Aktor
- 34: Druckbegrenzungsventil
- 36: Druckbegrenzungsventil
- 38: Steuereinheit
- 40: Hydrauliksystem
- 42: Speichereinheit
- 44: Recheneinheit
- 46: Eingabe-Ausgabeeinheit
- 48: Sollpressmittelzugspannung
- 50: Pressmittelzugspannung
- 52: Pressmittelzugspannung
- 54: Verlauf Grenzdruckwert
- 56: Signalverlauf
- 58: Sensoranordnung
- 60: Schätzer
- t1: Pulsdauer/ Anstellwert
- t2: Pulsdauer/ Anstellwert
- T1: Periode/ Anstellwert
- T2: Periode/ Anstellwert

## Patentansprüche

1. Verfahren zum Betreiben einer Rundballenpresse (10) mit einer in einem Gehäuse (14) angeordneten, einen variablen Durchmesser aufweisenden Presskammer (12), die von einem endlos umlaufenden Pressmittel (16) begrenzt wird, wobei das Pressmittel (16) von mehreren Rollen (20, 20a) angetrieben und/oder geführt wird, wobei zumindest einige der Rollen (20, 20a) durch einen jeweils gehäuseseitig schwenkbar gelagerten ersten Spannarm (26) und zweiten Spannarm (28) in ihrer Position verstellt werden, wobei der erste Spannarm (26) und der zweite Spannarm (28) durch hydraulisch betätigte Aktoren (30, 32) eines Hydrauliksystems (40) in ihrer Position verstellt werden, so dass zumindest ein Verdichtungsdruck erzeugt wird, mit welchem das Pressmittel (16) zur Formung eines Rundballens (16) wirkt, wobei zur Regelung des Verdichtungsdruckes zumindest einem Druckbegrenzungsventil (34, 36) ein anpassbarer Grenzdruckwert (p_{Grenz}) zum Überführen des zumindest einen Druckbegrenzungsventils (34, 36) aus einer Schließstellung in eine Offenstellung durch eine Steuereinheit (38) vorgegeben wird, **dadurch gekennzeichnet, dass** der vorgegebene Grenzdruckwert (p_{Grenz}) oberhalb eines Druckwertes liegt, welcher einer zur Erzielung des Verdichtungsdruckes erforderlichen Sollpressmittelzugspannung (48) entspricht, und dass das zumindest eine Druckbegrenzungsventil (34, 36) durch Ansteuerung durch die Steuereinheit (38) periodisch in seine Offenstellung überführt wird.

2. Verfahren nach Anspruch 1, **dadurch gekennzeichnet, dass** mittels einer Eingabe-Ausgabeeinheit (46) der Steuereinheit (38) zumindest eine Eingangsgröße durch eine Bedienperson vorgegeben wird, um in Abhängigkeit von den Eingangsgrößen den Grenzdruckwert (p_{Grenz}) zu adaptieren.

3. Verfahren nach Anspruch 2, **dadurch gekennzeichnet, dass** als Eingangsgrößen eine Erntegutart, eine Ballenform, Ballendurchmesser und/oder absolute oder relative Werte für Verdichtungsdrücke vorgegeben werden.

4. Verfahren nach einem der vorangehenden Ansprüche, **dadurch gekennzeichnet, dass** Anstellwerte (t₁, t₂; T₁, T₂) für die periodische Ansteuerung des zumindest einen Druckbegrenzungsventils (34, 36) unter Anwendung zumindest eines stochastischen Verfahrens bestimmt wird.

5. Verfahren nach Anspruch 4, **dadurch gekennzeichnet, dass** durch die Steuereinheit (38) aus einer zu erwartenden Dichte des Rundballens (16) und einem detektierten Durchsatz während des Formungsvorgangs die sich nach zumindest einer Ballendrehung einstellenden Anstellwerte (t₁, t₂; T₁, T₂) geschätzt wird.

6. Verfahren nach einem der vorangehenden Ansprüche, **dadurch gekennzeichnet, dass** durch eine Sensoranordnung (58) an der Ballenpresse (10) Sensorsignale bereitgestellt werden, die für eine Verteilung von durch eine Aufnahmevorrichtung (22) der Ballenpresse (10) aufgenommenen Erntegutes repräsentativ sind, und dass die Sensorsignale von der Steuereinheit (38) zur Generierung von Steuerdaten zur Ansteuerung der Aktoren (30, 32) ausgewertet werden.

7. Verfahren nach Anspruch 5, **dadurch gekennzeichnet, dass** bei Detektion einer inhomogenen Zuführung von Erntegut in die Presskammer (12) die Pressmittelzugspannung erhöht wird.

8. Verfahren nach einem der vorangehenden Anspruch, **dadurch gekennzeichnet, dass** Arbeitsdrücke der Aktoren (30, 32) eines jeden Spannarmes (26, 28) durch jeweils eines der Druckbegrenzungsventile (34, 36) überwacht werden.

9. Verfahren nach einem der vorangehenden Anspruch, **dadurch gekennzeichnet, dass** der vorgegebene Grenzdruckwert (p_{Grenz}) in Abhängigkeit von der Zunahme des Ballendurchmessers erhöht wird.

10. Rundballenpresse (10) mit einer in einem Gehäuse (14) angeordneten, einen variablen Durchmesser aufweisenden Presskammer (12), die von einem endlos umlaufenden Pressmittel (16) begrenzt ist, mit mehreren Rollen (20, 20a), welche das Pressmittel (16) antreiben und/oder führen, wobei zur Verstellung zumindest einiger der Rollen (20, 20a) in ihrer Position ein gehäuseseitig schwenkbar gelagerter erster Spannarm (26) und zweiter Spannarm (28) vorgesehen sind, wobei zur Erzeugung eines Verdichtungsdruckes, mit welchem das Pressmittel (16) zur Formung eines Rundballens (16) wirkt, hydraulisch betätigte Aktoren (30, 32) zur Verstellung der Position des ersten Spannarms (26) und des zweiten Spannarms (28) vorgesehen sind, mit welchem das Pressmittel (16) zur Formung eines Rundballens (16) wirkt, wobei zur Regelung des Verdichtungsdruckes eine Steuereinheit (38) zumindest einem Druckbegrenzungsventil (34, 36) einen anpassbaren Grenzdruckwert (p_{Grenz}) zum Überführen des zumindest einen Druckbegrenzungsventils (34, 36) aus einer Schließstellung in eine Offenstellung vorgibt, **dadurch gekennzeichnet, dass** der vorgegebene Grenzdruckwert (p_{Grenz}) oberhalb eines Druckwertes liegt, welcher einer zur Erzielung des Verdichtungsdruckes erforderlichen Sollpressmittelzugspannung (48) entspricht, und dass die Steuereinheit (38) das zumindest eine Druckbegrenzungsventil (34, 36) ansteuert, um während des Formungsvorgangs das zumindest eine Druckbegrenzungsventil (34, 36) periodisch in seine Offenstellung zu überführen.

11. Rundballenpresse (10) nach Anspruch 10, **dadurch gekennzeichnet, dass** die Steuereinheit (38) eine Eingabe-Ausgabeeinheit (46) umfasst, welche zur Eingabe von zumindest einer Eingangsgrößen durch eine Bedienperson eingerichtet ist.

12. Rundballenpresse (10) nach Anspruch 11, **dadurch gekennzeichnet, dass** die Eingabe-Ausgabeeinheit (46) zur Eingabe von Erntegutart, Ballenform, Ballendurchmesser und/oder absoluten oder relativen Werten für Verdichtungsdrücke als Eingangsgröße eingerichtet ist.

13. Rundballenpresse (10) nach Anspruch 11 oder 12, **dadurch gekennzeichnet, dass** die Steuereinheit (38) dazu eingerichtet ist, in Abhängigkeit von zumindest einer der Eingangsgrößen den Grenzdruckwert (p_{Grenz}) zu adaptieren.

14. Rundballenpresse (10) nach einem der Ansprüche 10 bis 13, **dadurch gekennzeichnet, dass** die Steuereinheit (38) dazu eingerichtet ist, Anstellwerte (t₁, t₂; T₁, T₂) für die periodische Ansteuerung des zumindest einen Druckbegrenzungsventils (34, 36) unter Anwendung zumindest eines stochastischen Verfahrens zu bestimmen.

15. Rundballenpresse (10) nach einem der Ansprüche 10 bis 14, **dadurch gekennzeichnet, dass** an der Ballenpresse (10) eine Sensoranordnung (58) angeordnet ist, die Sensorsignale bereitstellt, die für eine Verteilung von durch eine Aufnahmevorrichtung (22) der Ballenpresse (10) aufgenommenen Erntegutes repräsentativ sind, und dass die Steuereinheit (38) dazu eingerichtet ist, die Sensorsignale zur Generierung von Steuerdaten zur Ansteuerung der Aktoren (30, 32) auszuwerten.

## Claims

1. Method for operating a round baler (10) with a pressing chamber (12) which is disposed in a housing (14), has a variable diameter and is delimited by a continuously revolving pressing means (16), wherein the pressing means (16) is driven and/or guided by a plurality of rollers (20, 20a), wherein at least some of the rollers (20, 20a) are adjusted in terms of their position by a first tensioning arm (26) and a second tensioning arm (28) which are in each case pivotably mounted on the housing, wherein the first tensioning arm (26) and the second tensioning arm (28) are adjusted in terms of their position by hydraulically activated actuators (30, 32) of a hydraulic system (40) in such a way that at least one compression pressure by way of which the pressing means (16) acts to form a round bale (16) is generated, wherein for feedback-controlling the compression pressure, an adaptable limit pressure value (p_{Grenz}) for transferring the at least one pressure control valve (34, 36) from a closed position to an open position is specified to at least one pressure control valve (34, 36) by a control unit (38), **characterized in that** the specified limit pressure value (p_{Grenz}) is above a pressure value corresponding to a setpoint pressing means tension (48) required for achieving the compression pressure, and **in that** the at least one pressure control valve (34, 36) is periodically transferred to its open position by actuation by the control unit (38).

2. Method according to Claim 1, **characterized in that** by means of an input-output unit (46) of the control unit (38) at least one input variable is specified by an operator in order to adapt the limit pressure value (p_{Grenz}) as a function of the input variables.

3. Method according to Claim 2, **characterized in that** a crop material type, a bale shape, bale diameter and/or absolute or relative values for compression pressures are specified as input variables.

4. Method according to one of the preceding claims, **characterized in that** actuating values (t₁, t₂; T₁, T₂) for the periodic actuation of the at least one pressure control valve (34, 36) are determined using at least one stochastic method.

5. Method according to Claim 4, **characterized in that** the actuating values (t₁, t₂; T₁, T₂) established after at least one bale rotation are estimated by the control unit (38) from an expected density of the round bale (16) and a detected throughput during the forming procedure.

6. Method according to one of the preceding claims, **characterized in that** provided by a sensor assembly (58) on the baler (10) are sensor signals which are representative for a distribution of crop material received by a pick-up device (22) of the baler (10), and **in that** the sensor signals are evaluated by the control unit (38) to generate control data for actuating the actuators (30, 32).

7. Method according to Claim 5, **characterized in that**, when an inhomogeneous feed of crop material into the pressing chamber (12) is detected, the pressing means tension is increased.

8. Method according to one of the preceding claims, **characterized in that** working pressures of the actuators (30, 32) of each tensioning arm (26, 28) are in each case monitored by one of the pressure control valves (34, 36).

9. Method according to one of the preceding claims, **characterized in that** the specified limit pressure value (p_{Grenz}) is increased as a function of the increase in the bale diameter.

10. Round baler (10) with a pressing chamber (12) which is disposed in a housing (14), has a variable diameter and is delimited by a continuously revolving pressing means (16), with a plurality of rollers (20, 20a) which drive and/or guide the pressing means (16), wherein provided for adjusting at least some of the rollers (20, 20a) in terms of their position are a first tensioning arm (26) and a second tensioning arm (28) which are pivotably mounted on the housing, wherein provided for generating a compression pressure by which the pressing means (16) acts for forming a round bale (16) are hydraulically activated actuators (30, 32) for adjusting the position of the first tensioning arm (26) and of the second tensioning arm (28) by which the pressing means (16) acts for forming a round bale (16), wherein for feedback-controlling the compression pressure, a control unit (38) specifies an adaptable limit pressure value (p_{Grenz}) for transferring the at least one pressure control valve (34, 36) from a closed position to an open position to at least one pressure control valve (34, 36), **characterized in that** the specified limit pressure value (p_{Grenz}) is above a pressure value corresponding to a setpoint pressing means tension (48) required for achieving the compression pressure, and **in that** the control unit (38) actuates the at least one pressure control valve (34, 36) to periodically transfer the at least one pressure control valve (34), 36) to its open position during the forming procedure.

11. Round baler (10) according to Claim 10, **characterized in that** the control unit (38) comprises an input-output unit (46) which is configured for the input of least one input variable by an operator.

12. Round baler (10) according to Claim 11, **characterized in that** the input-output unit (46) is configured for the input of crop material type, bale shape, bale diameter and/or absolute or relative values for compression pressures as an input variable.

13. Round baler (10) according to Claim 11 or 12, **characterized in that** the control unit (38) is configured to adapt the limit pressure value (p_{Grenz}) as a function of at least one of the input variables.

14. Round baler (10) according to one of Claims 10 to 13, **characterized in that** the control unit (38) is configured to determine actuating values (t₁, t₂; T₁, T₂) for the periodic actuation of the at least one pressure control valve (34, 36) using at least one stochastic method.

15. Round baler (10) according to one of Claims 10 to 14, **characterized in that** disposed on the baler (10) is a sensor assembly (58) which provides sensor signals which are representative for a distribution of crop material received by a pick-up device (22) of the baler (10), and **in that** the control unit (38) is configured to evaluate the sensor signals to generate control data for actuating the actuators (30, 32).

## Revendications

1. Procédé de fonctionnement d'une presse à balles rondes (10) dotée d'une chambre de pressage (12) présentant un diamètre variable, qui est disposée dans un carter (14) et est délimitée par un moyen de pressage (16) circulant sans fin, le moyen de pressage (16) étant entraîné et/ou guidé par plusieurs rouleaux (20, 20a), la position d'au moins quelques-uns des rouleaux (20, 20a) étant réglée par un premier bras tendeur (26) et un deuxième bras tendeur (28) montés respectivement de manière pivotante côté carter, la position du premier bras tendeur (26) et du deuxième bras tendeur (28) étant réglée par des actionneurs (30, 32) à commande hydraulique d'un système hydraulique (40), de manière à produire au moins une pression de compression avec laquelle le moyen de pressage (16) agit pour former une balle ronde (16), sachant que pour régler la pression de compression, une valeur de pression limite (p_{Grenz}) adaptable est prédéfinie par une unité de commande (38) pour au moins une soupape de limitation de pression (34, 36), aux fins d'amener la soupape de limitation de pression (34, 36), au nombre d'au moins une, d'une position fermée dans une position ouverte, **caractérisé en ce que** la valeur de pression limite (p_{Grenz}) prédéfinie est supérieure à une valeur de pression qui correspond à une tension de traction de consigne de moyen de pressage (48) nécessaire à l'obtention de la pression de compression, et **en ce que** la soupape de limitation de pression (34, 36), au nombre d'au moins une, est amenée périodiquement dans sa position ouverte par activation par l'unité de commande (38).

2. Procédé selon la revendication 1, **caractérisé en ce que**, au moyen d'une unité d'entrée-sortie (46) de l'unité de commande (38), au moins une grandeur d'entrée est prédéfinie par un opérateur, afin d'adapter la valeur de pression limite (p_{Grenz}) en fonction des grandeurs d'entrée.

3. Procédé selon la revendication 2, **caractérisé en ce qu'**un type de produits récoltés, une forme de balle, un diamètre de balle et/ou des valeurs absolues ou relatives pour des pressions de compression sont prédéfinies en tant que grandeurs d'entrée.

4. Procédé selon une des revendications précédentes, **caractérisé en ce que** des valeurs de consigne (t₁, t₂; T₁, T₂) sont déterminées en vue de l'activation périodique de la soupape de limitation de pression (34, 36), au nombre d'au moins une, en utilisant au moins un procédé stochastique.

5. Procédé selon la revendication 4, **caractérisé en ce que** l'unité de commande (38) estime, à partir d'une densité attendue de la balle ronde (16) et d'un débit détecté pendant l'opération de formation, les valeurs de réglage (t₁, t₂ ; T₁, T₂) s'établissant après au moins une rotation de balle.

6. Procédé selon une des revendications précédentes, **caractérisé en ce qu'**un dispositif à capteur (58) sur la presse à balles (10) fournit des signaux de capteur qui sont représentatifs d'une répartition de la récolte ramassée par un dispositif de ramassage (22) de la presse à balles (10), et **en ce que** les signaux de capteur sont analysés par l'unité de commande (38) en vue de la génération de données de commande destinées à activer les actionneurs (30, 32).

7. Procédé selon la revendication 5, **caractérisé en ce que**, en cas de détection d'une amenée non homogène de produits récoltés dans la chambre de pressage (12), la tension de traction de moyen de pressage est augmentée.

8. Procédé selon une des revendications précédentes, **caractérisé en ce que** des pressions de travail des actionneurs (30, 32) de chacun des bras tendeurs (26, 28) sont surveillées respectivement par l'une des soupapes de limitation de pression (34, 36).

9. Procédé selon une des revendications précédentes, **caractérisé en ce que** la valeur de pression limite (p_{Grenz}) prédéfinie est augmentée en fonction de l'accroissement du diamètre de balle.

10. Presse à balles rondes (10) dotée d'une chambre de pressage (12) présentant un diamètre variable, qui est disposée dans un carter (14) et est délimitée par un moyen de pressage (16) circulant sans fin, comprenant plusieurs rouleaux (20, 20a) qui entraînent et/ou guident le moyen de pressage (16), sachant que pour le réglage de la position d'au moins quelques-uns des rouleaux (20, 20a), il est prévu un premier bras tendeur (26) et un deuxième bras tendeur (28) montés de manière pivotante côté carter, sachant que pour la production d'une pression de compression avec laquelle le moyen de pressage (16) agit en vue de la formation d'une balle ronde (16), des actionneurs (30, 32) à commande hydraulique sont prévus pour le réglage de la position du premier bras tendeur (26) et du deuxième bras tendeur (28), avec lequel le moyen de pressage (16) agit en vue de la formation d'une balle ronde (16), sachant que pour le réglage de la pression de compression, une unité de commande (38) prédéfinit une valeur de pression limite (p_{Grenz}) adaptable pour au moins une soupape de limitation de pression (34, 36), aux fins d'amener la soupape de limitation de pression (34, 36), au nombre d'au moins une, d'une position fermée dans une position ouverte, **caractérisée en ce que** la valeur de pression limite (p_{Grenz}) prédéfinie est supérieure à une valeur de pression qui correspond à une tension de traction de consigne de moyen de pressage (48) nécessaire à l'obtention de la pression de compression, et **en ce que** l'unité de commande (38) active la soupape de limitation de pression (34, 36), au nombre d'au moins une, pour amener la soupape de limitation de pression (34, 36), au nombre d'au moins une, de manière périodique dans sa position ouverte, pendant l'opération de formation.

11. Presse à balles rondes (10) selon la revendication 10, **caractérisée en ce que** l'unité de commande (38) comprend une unité d'entrée-sortie (46) qui est conçue pour la saisie d'au moins une grandeur d'entrée par un opérateur.

12. Presse à balles rondes (10) selon la revendication 11, **caractérisée en ce que** l'unité d'entrée-sortie (46) est conçue pour la saisie du type de produits récoltés, de la forme de balle, du diamètre de balle et/ou de valeurs absolues ou relatives pour des pressions de compression en tant que grandeur d'entrée.

13. Presse à balles rondes (10) selon la revendication 11 ou 12, **caractérisée en ce que** l'unité de commande (38) est conçue pour adapter la valeur de pression limite (p_{Grenz}) en fonction d'au moins une des grandeurs d'entrée.

14. Presse à balles rondes (10) selon une des revendications 10 à 13, **caractérisée en ce que** l'unité de commande (38) est conçue pour déterminer des valeurs de consigne (t₁, t₂ ; T₁, T₂) en vue de l'activation périodique de la soupape de limitation de pression (34, 36), au nombre d'au moins une, en utilisant au moins un procédé stochastique.

15. Presse à balles rondes (10) selon une des revendications 10 à 14, **caractérisée en ce qu'**il est prévu sur la presse à balles (10), un dispositif à capteur (58) qui fournit des signaux de capteur, lesquels sont représentatifs d'une répartition de la récolte ramassée par un dispositif de ramassage (22) de la presse à balles (10), et **en ce que** l'unité de commande (38) est conçue pour analyser les signaux de capteur aux fins de générer des données de commande pour l'activation des actionneurs (30, 32).
